# EUROPÄISCHE PATENTSCHRIFT

(11) **EP 1 809 876 B1**
(45) Veröffentlichungstag und Bekanntmachung des Hinweises auf die Patenterteilung: **20.02.2008**
(21) Anmeldenummer: 05760802.8
(22) Anmeldetag: 13.07.2005
(51) Int. Cl.: F02D 41/00, F02B 37/12, F02D 23/00

(54) **VERFAHREN UND VORRICHTUNG ZUR STEUERUNG ODER REGELUNG DES LADEDRUCKS EINER BRENNKRAFTMASCHINE MIT EINEM VERDICHTER**
METHOD AND DEVICE FOR CONTROLLING OR REGULATING THE BOOST PRESSURE OF AN INTERNAL COMBUSTION ENGINE COMPRISING A COMPRESSOR
PROCEDE ET DISPOSITIF POUR COMMANDER OU REGULER UNE PRESSION D'ADMISSION D'UN MOTEUR A COMBUSTION INTERNE DOTE D'UN COMPRESSEUR

(30) Priorität: 01.09.2004 DE 102004042272
(43) Veröffentlichungstag der Anmeldung: 25.07.2007
(73) Patentinhaber: ROBERT BOSCH GMBH, 70442 Stuttgart (DE)
(72) Erfinder: KASSNER, Uwe, 71696 Moeglingen (DE)
(86) Internationale Anmeldenummer: PCT/EP2005/053361
(87) Internationale Veröffentlichungsnummer: WO 2006/024577

(56) Entgegenhaltungen:
- DE-A1- 10 034 789
- DE-A1- 10 156 839
- DE-A1- 10 160 469
- US-A1- 2001 032 466
- US-A1- 2005 132 705
- US-B1- 6 401 457
- DATABASE WPI Section PQ, Week 200467 Derwent Publications Ltd., London, GB; Class Q52, AN 2003-594966 XP002345700 & KR 435 743 B (HYUNDAI MOTOR CO LTD) 12. Juni 2004 (2004-06-12)

## Beschreibung

### Stand der Technik

Die vorliegende Erfindung betrifft ein Verfahren und eine Vorrichtung zur Steuerung oder Regelung des Ladedrucks einer Brerinkraftmaschine mit einem Verdichter in einer Luftzufuhr der Brennkraftmaschine. Dabei ist ein Stellglied vorgesehen, mit dem der Ladedruck des Verdichters eingestellt wird.

Gemäß einem ebenfalls bekannten Prinzip wird der Verdichter in der Luftzufuhr über eine Welle von einer Turbine in einem Abgasstrang der Brennkraftmaschine angetrieben. Verdichter, Turbine und Welle bilden dabei einen sogenannten Abgasturbolader.

Aus der US 6,401,457 B1 ist es bekannt, eine Solldrehzahl des Turboladers funktional abhängig von einer Kompressoreinlasstemperatur und einem Grenzwert für eine Kompressorauslasstemperatur zu bestimmen.

Aus der DE 100 34 789 ist ein Verfahren und eine Vorrichtung zur Kompensation des nichtlinearen Verhaltens des Luftsystems einer Brennkraftmaschine bekannt. Dabei sollen jegliche während des Motorbetriebs auftretenden Einflüsse kompensiert werden, welche sich auf das nichtlineare Verhalten des Luftsystems auswirken. Dazu wird aus mindestens einer Zustandsgröße des Luftsystems und der von einem Regler gelieferten Stellgröße eine neue Stellgröße hergeleitet, deren nichtlineare Abhängigkeit von der Stellgröße aus dem Regler invers ist zu oder nichtlinearen Abhängigkeit der Istgröße des die Regelstrecke darstellenden Luftsystems von der neuen Stellgröße.

Wie z. B. aus der DE 41 07 693 A1 oder der EP 04 54 943 A1 hervorgeht, erfolgt üblicherweise die Ladedruckregelung dadurch, dass ein Regler in Abhängigkeit von der Abweichung zwischen einem Soll-Ladedruck und einem Ist-Ladedruck eine Stellgröße bildet. Diese Stellgröße wird entweder dazu verwendet (s. DE 41 07 693 A1), ein Ventil in einem die Turbine des Abgasturboladers im Abgaskanal überbrückenden Bypass oder die verstellbaren Turbinenleitschaufeln einer Turbine mit variabler Geometrie zu steuern (s. EP 04 54 943 A1).

An Motoren werden zunehmend höhere Anforderungen bzgl. der Abgas- und Verbrauchskennwerte gestellt. Ein Abgasturbolader mit variabler Turbinengeometrie erlaubt durch Verstellen der Turbinenleitschaufeln eine Anpassung an den aktuellen Motorbetriebspunkt. Mit dieser Technik kann ein verzögertes Ansprechen des Abgasturboladers (Turboloch) verringert und gleichzeitig der Wirkungsgrad des Motors verbessert werden. Bei Beschleunigungsvorgängen treten oft starke Überschwinger des Ladedrucks auf, die den Turbolader mechanisch sehr stark belasten. Darüber hinaus kann ein zu starkes Schließen der variablen Turbinengeometrie in der Beschleunigungsphase zu einem unerwünscht hohen Abgasgegendruck führen, wodurch Dynamik und Wirkungsgrad des Motors negativ beeinflusst werden.

Aus der DE 10010978 A1 ist eine Vorrichtung zur Regelung des Ladedrucks einer Brennkraftmaschine mit einem Abgasturbolader bekannt, dessen im Abgaskanal der Brennkraftmaschine angeordnete Turbine eine veränderbare Geometrie aufweist, wobei die Regelung des Ladedrucks über eine Verstellung der Turbinengeometrie erfolgt. Ein Regler bildet in Abhängigkeit von dem im Abgaskanal vor der Turbine herrschenden Abgasgegendruck eine Stellgröße für die Turbinengeometrie. Auf diese Weise werden die oben beschriebenen Probleme zufriedenstellend gelöst.

Der Erfindung liegt die Aufgabe zugrunde, ein alternatives Verfahren und eine alternative Vorrichtung zur Ladedruckregelung der eingangs genannten Art anzugeben, welche gewährleisten, dass der Ladedruck bei einem Lastwechsel dem Verlauf des gewünschten Ladedrucksollwertes möglichst schnell folgt, wobei eine Überschreitung des Ladedrucksollwertes vermieden wird, um den Verdichter bzw. den Abgasturbolader vor unnötig hohen Belastungen zu schützen.

### Vorteile der Erfindung

Die genannte Aufgabe wird mit den Merkmalen der Ansprüche 1 und 4 dadurch gelöst. Wird nun erfindungsgemäß die Drehzahl des Verdichters zur Herleitung einer Stellgröße verwendet, so erreicht man dadurch eine sehr schnelle Reaktion der Ladedruckregelung auf eine Veränderung des vorgegebenen Soll-Ladedrucks. Die Drehzahl des Verdichters reagiert erheblich schneller als der Ladedruck auf ein verändertes Verhalten der Regelstrecke - z. B. Drehzahländerung, Lastwechsel, Änderung einer Abgasrückführung - oder auf Störungen z. B. im Stellsystem. Dabei kann ein vorgegebener Soll-Ladedruck ohne Überschwingen eingestellt werden. Der Verdichter bzw. der Abgasturbolader werden auf diese Weise auch vor Überdrehzahl geschützt. Die Verwendung des Abgasgegendruckes zur Herleitung der Stellgröße ist dabei nicht erforderlich.

Aus der Abweichung zwischen einem Soll-Ladedruck und einem Ist-Ladedruck wird von einem ersten Regler eine Solldrehzahl des Verdichters ermittelt, und aus der Abweichung zwischen der Solldrehzahl des Verdichters und einer gemessenen oder geschätzten Istdrehzahl des Verdichters wird von einem zweiten Regler die Stellgröße für das Stellglied hergeleitet. Auf diese Weise wird eine Ladedruckregelung mit unterlagerter Regelung der Drehzahl des Verdichters erreicht.

Vorteilhafte Weiterbildungen und Verbesserungen des erfindungsgemäßen Verfahrens gehen aus den Unteransprüchen hervor.

Vorteilhaft ist weiterhin, wenn die Solldrehzahl des Verdichters auf einen vorgegebenen Bereich begrenzt wird. Auf diese Weise lässt sich der Verdichter bzw. der Abgasturbolader wirkungsvoll vor Verschleiß und Zerstörung schützen.

### Zeichnung

Anhand eines in der Zeichnung dargestellten Ausführungsbeispiels wird nachfolgend die Erfindung näher erläutert. Es zeigen:

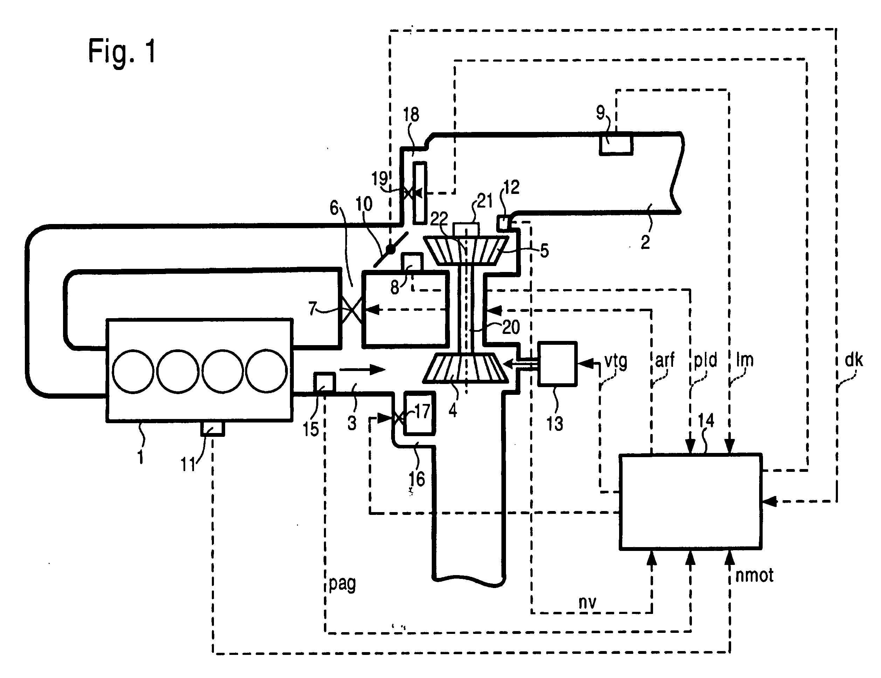

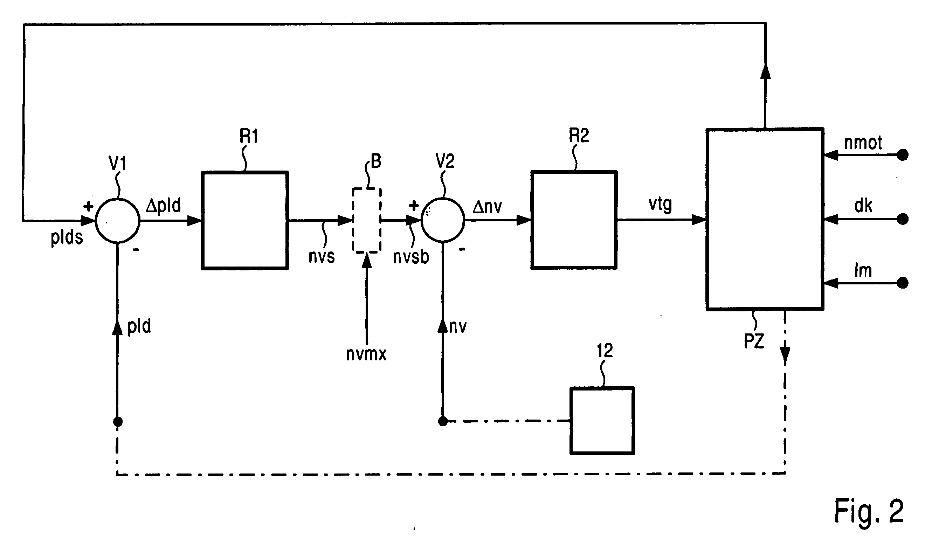

Figur 1 eine schematische Darstellung einer Brennkraftmaschine mit einem Abgasturbolader und Figur 2 ein Funktionsdiagramm für die Regelung des Ladedrucks.

### Beschreibung des Ausführungsbeispiels

In der Figur 1 ist eine Brennkraftmaschine 1 mit einer als Ansaugkanal ausgebildeten Luftzufuhr 2 und einem Abgaskanal 3 dargestellt. Im Abgaskanal 3 ist die Turbine 4 und im Ansaugkanal 2 der Verdichter 5 eines Abgasturboladers angeordnet. Über eine Welle 20 treibt die Turbine 4 den Verdichter 5 an, so dass sich der Verdichter 5 mit einer Drehzahl nv dreht. Des weiteren kann die Brennkraftmaschine mit einem Abgasrückführkanal 6 ausgestattet sein, der den Abgaskanal 3 mit dem Saugrohr 2 verbindet. Im Abgasrückführkanal 6 befindet sich ein steuerbares Ventil 7. Im Saugrohr 2 sind ein Drucksensor 8 zur Messung des Ladedrucks pld und ein Luftmassensensor 9 zur Messung der angesaugten Luftmasse Im anbeordnet. Außerdem befindet sich im Saugrohr eine Drosselklappe 10. Ein Sensor 11 erfasst die Drehzahl mmot der Brennkraftmaschine, und ein Drehzahlsensor 12 im Bereich des Verdichters 5 misst die Drehzahl nv des Verdichters 5. Ein Drucksensor 15 im Abgaskanal 3 misst den Abgasgegendruck pag vor der Turbine 4. Es ist ein Steller 13 vorhanden, der auf die Turbinengeometrie einwirkt, d. h. eine Verstellung der Turbinenleitschaufeln vornimmt. Dieser Steller 13 erhält eine Stellgröße vtg aus einem Steuergerät 14. Zur Herleitung der Stellgröße vtg für die Turbinengeometrie verwendet das Steuergerät 14 als Eingangsgrößen die Motordrehzahl nmot, die Drosselklappenstellung dk, die angesaugte Luftmasse Im, den Ladedruck pld und die Drehzahl nv des Verdichters 5. Zur Herleitung der Stellgröße arf für das Abgasrückführventil 7 verwendet das Steuergerät 14 als Eingangsgrößen die Motordrehzahl nmot, die Drosselklappenstellung dk, die angesaugte Luftmasse Im, den Ladedruck pld und den Abgasgegendruck pag.

Wie das Steuergerät 14 aus den genannten Eingangsgrößen die Stellgröße vtg für die Turbinengeometrie herleitet, wird anhand des Funktionsdiagramms in Figur 2 näher beschrieben. Ein Prozessor PZ ermittelt aus der Motordrehzahl nmot, der Drosselklappenstellung dk, welche den Fahrerwunsch wiedergibt, und noch eventuell anderen hier nicht erwähnten Betriebsgrößen des Motors einen Soll-Ladedruck plds. Auf die Herleitung des Soll-Ladedrucks plds wird hier nicht näher eingegangen, weil sie zum Stand der Technik gehört. In einem ersten Verknüpfungspunkt V1 wird die Abweichung Δpld zwischen dem Soll-Ladedruck plds und einem Ist-Ladedruck pld ermittelt. Der Abweichungswert Δpld für den Ladedruck wird einem ersten Regler R1 (z. B. PI oder PID-Regler) zugeführt. Die Ausgangsgröße des ersten Reglers R1 entspricht einer Solldrehzahl nvs des Verdichters 5. Optional und wie in Figur 2 gestrichelt angedeutet kann ein Begrenzungsglied B vorgesehen sein, dem eingangsseitig die Solldrehzahl nvs des Verdichters 5 zugeführt ist. Das Begrenzungsglied B vergleicht dabei die Solldrehzahl nvs des Verdichters 5 mit einer maximal zulässigen Drehzahl nvmx des Verdichters 5. Das Begrenzungsglied B bildet das Minimum aus der Solldrehzahl nvs des Verdichters 5 und der maximal zulässigen Drehzahl nvmx des Verdichters 5 und gibt dieses Minimum als begrenzte Solldrehzahl nvsb an einen zweiten Verknüpfungspunkt V2 ab. Das Begrenzungsglied B ist somit als Minimumauswahlglied ausgebildet. Ohne Verwendung des Begrenzungsgliedes B wird die Solldrehzahl nvs des Verdichters 5 unbegrenzt an den zweiten Verknüpfungspunkt V2 abgegeben. Die maximal zulässige Drehzahl nvmx des Verdichters 5 kann beispielsweise auf einem Prüfstand derart appliziert werden, dass eine übermäßige Beanspruchung der Komponenten des Abgasturboladers 4,5,20 durch die Drehzahl nv des Verdichters 5 vermieden, insbesondere eine Zerstörung sicher verhindert wird. Durch das Begrenzungsglied B wird die Solldrehzahl nvs des Verdichters 5 auf einen durch die maximal zulässige Drehzahl nvmx des Verdichters 5 einseitig definierten Bereich begrenzt. Erfindungsgemäß ist es nun vorgesehen, die Drehzahl des Verdichters 5 als zusätzliche Größe in die Regelung des Ladedruckes einzubeziehen. Dazu wird im zweiten Verknüpfungspunkt V2 die Abweichung Δnv zwischen der gegebenenfalls begrenzten Solldrehzahl nvs(b) des Verdichters 5 und der Istdrehzahl nv des Verdichters 5 bestimmt. Der Abweichungswert Δnv für die Drehzahl des Verdichters 5 wird einem zweiten Regler R2 zugeführt, der schließlich die Stellgröße vtg für die veränderbare Turbinengeometrie bildet.

Auf diese Weise wird die Drehzahl des Verdichters 5 durch eine der Ladedrockregelung unterlagerte Verdichterdrehzahlregelung berücksichtigt. Die Ladedruckregelung wird dadurch dynamisch schneller, somit werden Regelabweichungen schneller ausgeregelt. Zusätzlich wird die Ladedruckregelung robuster, d.h. Änderungen der Dynamik der Brennkraftmaschine 1 z.B. aufgrund geänderter Betriebsbedingungen der Brennkraftmaschine 1 verändern das Regelverhalten der Ladedruckregelung weniger stark.

Der Ist-Ladedruck pld kann entweder mittels des Drucksensors 8 im Saugrohr 2 gemessen werden, oder es kann ein Schätzwert für den Ist-Ladedruck vom Prozessor PZ aus verschiedenen Betriebsgrößen der Brennkraftmaschine hergeleitet werden. Die strichpunktierte Linie in der Figur 2 deutet an, dass der Ist-Ladedruck pld ein vom Prozessor PZ ermittelter Schätzwert ist. Die Istdrehzahl nv des Verdichters 5 kann ein Messwert des Drehzahlsensors 12 im Bereich des Verdichters 5 sein.

Der Drehzahlsensor 12 kann dabei die Drehzahl nv des Verdichters 5 in dem Fachmann bekannter Weise unter Ausnutzung des Hall-Effekts oder unter Ausnutzung des GMR-Effekts (GMR = Giant Magneto Resistance) messen. Die Messung der Drehzahl nv des Verdichters kann beispielsweise mit einer aus der EP 0952 454 A1 bekannten Weise durchgeführt werden. Die Drehzahlmessung mittels GMR-Effekt ist beispielsweise aus der DE 102 50 319 A1 bekannt. Die Drehzahl des Verdichters 5 kann auch durch entsprechende Messung der Drehzahl der Turbine 4 oder der Welle 20 ermittelt werden. In der Regel entspricht dabei die Drehzahl der Turbine 4 der Drehzahl der Welle 20 und der Drehzahl nv des Verdichters 5. Der Drehzahlsensor 12 ist in diesem Fall im Bereich der Turbine 4 bzw. Welle 20 anzuordnen, um die Drehzahl der Turbine 4 bzw. der Welle 20 zu messen. Der Drehzahlsensor 12 wirkt bei Ausnutzung des GMR-Effektes mit einem auf einer Welle 22 des Verdichters, beispielsweise und wie in Figur 1 angedeutet auf einem Ende der Welle 22 des Verdichters 5, angeordneten Dauermagneten 21 zusammen. Dieser Dauermagnet 21 ist magnetisiert. Der Drehzahlsensor 12 umfasst dann ein Messelement, das die Drehzahl des Dauermagneten 21 und damit der Welle 22 des Verdichters 5 und damit des Verdichters 5 auf der Basis des GMR-Effektes wie beispielsweise in der DE 102 50 319 A1 beschrieben erfasst.

Für die Istdrehzahl nv des Verdichters 5 kann aber auch ein vom Prozessor PZ aus Betriebsgrößen der Brennkraftmaschine hergeleiteter Schätzwert verwendet werden. Im vorliegenden Beispiel wird jedoch die Istdrehzahl nv des Verdichters 5 vom Drehzahlsensor 12 geliefert.

Auf die mögliche Berechnung der Schätzwerte für den Ist-Ladedruck pld und die Istdrehzahl nv des Verdichters 5 wird hier nicht näher eingegangen, weil hier aus dem Stand der Technik bekannte Verfahren verwendet werden können. Es sei hier nur so viel gesagt, dass die Istdrehzahl nv des Verdichters 5 aus Größen wie dem Istladedruck pld, einem Umgebungsdruck und der angesaugten Luftmasse Im abgeleitet werden kann. Die dazu erforderliche Vielzahl von Sensoren bedingt durch die Einzeltoleranzen der Sensoren ein relativ ungenaues Signal. Deshalb muss in diesem Fall ein ausgeprägter Sicherheitsabstand zur maximal zulässigen Drehzahl nvmx des Verdichters 5 eingehalten werden. Aufgrund der direkten Messung der Drehzahl nv des Verdichters 5 mittels des Drehzahlsensors 12 kann dieser Sicherheitsabstand geringer ausfallen, da nur die Messtoleranz des Drehzahlsensors 12 berücksichtigt werden muss. Der erforderliche Sicherheitsabstand kann dabei bereits in die maximal zulässige Drehzahl nvmx des Verdichters 5 eingerechnet bzw. bei der Applikation der maximal zulässigen Drehzahl nvmx auf dem Prüfstand berücksichtigt werden.

Durch Schließen der Turbinengeometrie steigt der Abgasgegendruck pag im Abgaskanal 3 vor der Turbine 4 an und damit auch die in die Turbine 4 eingekoppelte Energie. Dadurch steigt die Drehzahl nv des Verdichters 5 und gleichzeitig auch der Ladedruck pld im Saugrohr 2. Falls eine Abgasrückführung, wie in der Figur 1 dargestellt, vorhanden ist, kann über den Abgasrückführkanal 6 durch Öffnen des Ventils 7 Abgas in das Saugrohr gelangen, wenn der Abgasgegendruck pag größer ist als der Ladedruck pld. Wird das Abgasrückführventil 7 geöffnet, so sinkt der Abgasgegendruck pag und dadurch ebenfalls der Ladedruck pld im Saugrohr 2.

Die Erfindung basiert auf der Beobachtung, dass die Drehzahl nv des Verdichters 5 wesentlich schneller auf eine Verstellung der Turbinengeometrie reagiert als der Ladedruck pld. Der Ladedruck pld spricht erst um die Zeitkonstante des Abgasturboladers verzögert an. Daher wird die Dynamik eines Reglers für den Ladedruck wesentlich durch das Trägheitsmoment des Abgasturboladers begrenzt Die dabei auftretende Zeitkonstante ist jedoch wesentlich größer als die Zeitkonstante einiger Störungen, die durch das zeitvariante Verhalten der Regelstrecke, durch Öffnen und Schließen des Abgasrückführventils 7 oder durch Fehler im Leitapparat der Turbine 4 auf das System wirken. Störungen des Leitapparats der Turbine, Veränderungen des Ventilhubs, des Abgasrückführventils 7 oder Veränderungen des Arbeitspunktes der Brennkraftmaschine wirken sich sehr direkt auf die Drehzahl nv des Verdichters 5 aus und können daher in dem unterlagerten Regelkreis mit dem Regler R2 sehr schnell ausgeglichen werden. Der überlagerte Regelkreis mit dem Regler R1 muss langsamer ausgelegt werden als der unterlagerte Regelkreis mit dem Regler R2. Da der Ladedruck pld aber ohnehin träger ist als die Drehzahl nv des Verdichters 5, wird diese Bedingung automatisch erfüllt.

Bei geringem Massendurchsatz durch die Brennkraftmaschine 1 wird auch im Stationärbetrieb der Brennkraftmaschine 1 das maximal erzielbare Drehmoment bzw. die maximal erzielbare Leistung der Brennkraftmaschine 1 durch den maximal erreichbaren Ladedruck begrenzt.

Das vorstehende Beispiel wurde anhand des Stellers 13 beschrieben, der auf die Turbinengeometrie einwirkt, d. h. eine Verstellung der Turbinenleitschaufeln vornimmt. Zusätzlich oder alternativ kann als Steller auch ein erstes Bypassventil 17 in einem gegebenenfalls vorhandenen und in Figur 1 beispielhaft dargestellten ersten Bypass 16 um die Turbine 4 im Abgaskanal 3 verwendet werden. Auf diese Weise wird der Öffnungsquerschnitt des ersten Bypasses 16 beeinflusst. Zusätzlich oder alternativ kann als Steller auch ein zweites Bypassventil 19 in einem gegebenenfalls vorhandenen und in Figur 1 beispielhaft dargestellten zweiten Bypass 18 um den Verdichter 5 im Ansaugkanal 2 verwendet werden. Auf diese Weise wird der Öffnungsquerschnitt des zweiten Bypasses 18 beeinflusst.

Da die Drehzahl des Verdichters 5 mit der Drehzahl der Welle 20 bzw. mit der Drehzahl der Turbine 4 zumindest korreliert, kann die Stellgröße für den Steller 13 in entsprechender Weise auch durch Verwendung der Drehzahl der Welle 20 oder durch Verwendung der Drehzahl der Turbine 4 anstelle der Drehzahl des Verdichters 5 ermittelt werden. Auch auf diese Weise wird die Stellgröße des Stellers 13 abhängig von der Drehzahl des Verdichters 5 ermittelt.

Das vorstehende Beispiel wurde anhand eines Regelkreises beschrieben, das einem überlagerten Regelkreis einen weiteren Regelkreis unterlagert. Alternativ sind andere Steuerungen bzw. Regelungen denkbar, die nach dem Stand der Technik den Ist-Ladedruck pld als gemessene Eingangsgröße benutzen. Diese Steuerungen und Regelungen sollen ebenfalls die Istdrehzahl nv des Verdichters 5 als zusätzliche Eingangsgröße verwenden. Die Ausregelung der oben beschriebenen Störungen wird damit schneller und das unerwünschtes Überschwingen des Ladedrucks wird vermieden. Dem Fachmann bekannt sind derartige Steuerungen und Regelung beispielsweise als Zustandsregelung.

Weiterhin bekannt sind Steuerungen und Regelungen, die mit geeigneten mathematischen Funktionen Klassifizierungen der Eingangssignale vornehmen und daraus Stelleingriffe ableiten. Dem Fachmann sind diese Verfahren als Fuzzy-Regler bekannt. Diesem Regelungsverfahren soll ebenfalls als Eingangsgröße die Istdrehzahl nv des Verdichters 5 hinzugefügt werden.

## Patentansprüche

1. Verfahren zur Steuerung oder Regelung des Ladedrucks einer Brennkraftmaschine (1) mit einem Verdichter (5) in einer Luftzufuhr (2) der Brennkraftmaschine (1), wobei ein Stellglied (13) vorgesehen ist, mit dem der Ladedruck des Verdichters (5) eingestellt wird, wobei in Abhängigkeit einer Drehzahl des Verdichters (5) eine Stellgröße für das Stellglied (13) ermittelt wird, **dadurch gekennzeichnet, dass** aus einer Abweichung zwischen einem Soll-Ladedruck und einem Ist-Ladedruck von einem ersten Regler (R1) eine Solldrehzahl des Verdichters (5) ermittelt wird und dass aus der Abweichung zwischen der Solldrehzahl des Verdichters (5) und einer gemessenen oder geschätzten Istdrehzahl des Verdichters (5) von einem zweiten Regler (R2) die Stellgröße für das Stellglied hergeleitet wird.

2. Verfahren nach Anspruch 1, **dadurch gekennzeichnet, dass** die Solldrehzahl des Verdichters (5) auf einen vorgegebenen Bereich begrenzt wird.

3. Verfahren nach einem der vorherigen Ansprüche, **dadurch gekennzeichnet, dass** der Verdichter (5) Teil eines Abgasturboladers (4, 5, 20) ist, dass mit der Stellgröße eine variable Geometrie einer Turbine (4) des Abgasturboladers (4, 5, 20) oder ein Öffnungsquerschnitt eines ersten Bypasses (16) um die Turbine (4) oder eines zweiten Bypasses (18) um den Verdichter (5) des Abgasturboladers (4, 5, 20) beeinflusst wird.

4. Vorrichtung zur Steuerung oder Regelung des Ladedrucks einer Brennkraftmaschine (1) mit einem Verdichter (5) in einer Luftzufuhr (2) der Brennkraftmaschine (1), wobei ein Stellglied (13) vorgesehen ist, mit dem der Ladedruck des Verdichters (5) eingestellt wird, wobei ein Regler (R2) in Abhängigkeit einer Drehzahl des Verdichters (5) eine Stellgröße für das Stellglied (13) ermittelt, **dadurch gekennzeichnet, dass** ein erster Regler (R1) aus der Abweichung zwischen einem Soll-Ladedruck und einem Ist-Ladedruck eine Solldrehzahl des Verdichters (5) ermittelt und dass ein zweiter Regler (R2) aus der Abweichung zwischen der Solldrehzahl des Verdichters (5) und einer gemessenen oder geschätzten Istdrehzahl des Verdichters (5) die Stellgröße für das Stellglied (13) herleitet.

## Claims

1. Method for controlling or regulating the charge pressure of an internal combustion engine (1) with a compressor (5) in an air supply (2) of the internal combustion engine (1), with an actuating element (13) being provided, by means of which the charge pressure of the compressor (5) is set, with an actuating variable for the actuating element (13) being determined as a function of a rotational speed of the compressor (5), **characterized in that** a nominal rotational speed of the compressor (5) is determined by a first regulator (R1) from a deviation between a nominal charge pressure and an actual charge pressure, and **in that** the actuating variable for the actuating element is derived by a second regulator (R2) from the deviation between the nominal rotational speed of the compressor (5) and a measured or estimated actual rotational speed of the compressor (5).

2. Method according to Claim 1, **characterized in that** the nominal rotational speed of the compressor (5) is limited to a predefined range.

3. Method according to one of the preceding claims, **characterized in that** the compressor (5) is part of an exhaust gas turbocharger (4, 5, 20), **in that** the actuating variable serves to influence a variable geometry of a turbine (4) of the exhaust gas turbocharger (4, 5, 20) or an opening cross section of a first bypass (16) around the turbine (4) or of a second bypass (18) around the compressor (5) of the exhaust gas turbocharger (4, 5, 20).

4. Device for controlling or regulating the charge pressure of an internal combustion engine (1) with a compressor (5) in an air supply (2) of the internal combustion engine (1), with an actuating element (13) being provided, by means of which the charge pressure of the compressor (5) is set, with a regulator (R2) determining an actuating variable for the actuating element (13) as a function of a rotational speed of the compressor (5), **characterized in that** a first regulator (R1) determines a nominal rotational speed of the compressor (5) from the deviation between a nominal charge pressure and an actual charge pressure, and **in that** a second regulator (R2) derives the actuating variable for the actuating element (13) from the deviation between the nominal rotational speed of the compressor (5) and a measured or estimated actual rotational speed of the compressor (5).

## Revendications

1. Procédé de commande ou de régulation de la pression de charge d'un moteur à combustion interne (1) comportant un compresseur (5) installé dans l'alimentation en air (2) du moteur à combustion interne (1),
un organe de réglage (13) étant prévu pour régler la pression de charge du compresseur (5),
et en fonction de la vitesse de rotation du compresseur (5), on détermine une grandeur de réglage pour l'organe de réglage (13),
**caractérisé en ce qu'**
à partir de la déviation entre la pression de charge de consigne et la pression de charge réelle, un premier régulateur (R1) détermine une valeur de rotation de consigne pour le compresseur (5) et
un second régulateur (R2) déduit la grandeur de réglage pour l'organe de réglage à partir de la déviation entre la vitesse de rotation de consigne du compresseur (5) et d'une vitesse de rotation réelle mesurée ou évaluée du compresseur (5).

2. Procédé selon la revendication 1,
**caractérisé en ce qu'**
on limite la vitesse de rotation de consigne du compresseur (5) dans une plage prédéfinie.

3. Procédé selon l'une des revendications précédentes,
**caractérisé en ce que**
le compresseur (5) fait partie d'un turbocompresseur de gaz d'échappement (4, 5, 20),
avec la grandeur de réglage on influence la géométrie variable de la turbine (4) du turbocompresseur de gaz d'échappement (4, 5, 20) ou la section d'ouverture d'un premier by-pass (16) autour de la turbine (4) ou d'un second by-pass (18) autour du compresseur (5) du turbocompresseur de gaz d'échappement (4, 5, 20).

4. Dispositif de commande ou de régulation de la pression de charge d'un moteur à combustion interne (1) comportant un compresseur (5) installé dans l'alimentation en air (2) du moteur à combustion interne (1),
un organe de réglage (13) étant prévu pour régler la pression de charge du compresseur (5),
un régulateur (R2) déterminant une grandeur de réglage pour l'organe de réglage (13) en fonction de la vitesse de rotation du compresseur (5),
**caractérisé en ce qu'**
un premier régulateur (R1), partant de la déviation entre la pression de charge de consigne et la pression de charge réelle, détermine une vitesse de rotation de consigne du compresseur (5) et
un second régulateur (R2), partant de la déviation entre la vitesse de rotation de consigne du compresseur (5) et une vitesse de rotation réelle mesurée ou évaluée du compresseur (5), déduit la grandeur de réglage pour l'organe de réglage (13).
